# EUROPEAN PATENT APPLICATION

(11) **EP 4 675 760 A1**
(43) Date of publication of application: **07.01.2026**
(21) Application number: 24216179.2
(22) Date of filing: 28.11.2024
(51) Int. Cl.: H01M 10/613, H01M 50/242, H01M 50/209, H01M 50/224, H01M 50/249, H01M 50/291, H01M 10/6567

(54) **BATTERY BOX AND BATTERY PACK**

(30) Priority: 05.07.2024 CN 202421590877 U; 23.07.2024 WO PCT/CN2024/106944
(71) Applicant: Eve Energy Storage Co., Ltd, Wuhan, Hubei 430074 (CN)
(72) Inventor: LU, Shun, 430074 Wuhan, Hubei (CN); GUI, Ke, 430074 Wuhan, Hubei (CN); LI, Hexin, 430074 Wuhan, Hubei (CN)
(74) Representative: Berggren Oy

(57) **Abstract**

A battery box (1) and a battery pack are provided. The battery box (1) includes: a bottom plate (10); a side plate (20), where the side plate (20) surrounds a peripheral edge (11) of the bottom plate (10) and is combined with the bottom plate to form an accommodating cavity (30) for accommodating a battery module (70); and a plurality of protrusions (40) disposed in the accommodating cavity (30) and disposed on the bottom plate (10), where the protrusions (40) are protruded from the bottom plate (10) in a first direction (X) and arranged in an array in a second direction (Y) and a third direction (Z), a top portion of each of the protrusions (40) is configured to contact a bottom portion of the battery module (70) to lift the battery module (70).

## Description

### TECHNICAL FIELD

The present disclosure relates to the field of battery box technologies, and more particular to a battery box and a battery pack.

### BACKGROUND

A power battery is a main power energy source of a pure electric vehicle at present and be one of important factors influencing the performance of the pure electric vehicle. The safety of the power battery directly affects the safety of the vehicle. Currently, a battery box is used as a carrier of a battery module and play a key role in the safety work and protection of the battery module.

### SUMMARY

In the related art, after a battery box is subjected to a vibration impact to easily result in a deformed structure of the battery box, thereby causing damage to the battery module inside the battery box. As such, it is unfavorable to normal operation of the battery module, and then user's use requirements cannot be met.

Accordingly, there is an urgent need to design a battery box and a battery pack to address the above technical problems.

The present application further provides a battery pack. The battery pack includes a box, a battery module In a first aspect, the present disclosure provides a battery box, including: a bottom plate; a side plate, where the side plate surrounds a peripheral edge of the bottom plate and is combined with the bottom plate to form an accommodating cavity for accommodating a battery module; and a plurality of protrusions disposed in the accommodating cavity and disposed on the bottom plate, where the protrusions are protruded from the bottom plate in a first direction and arranged in an array in a second direction and a third direction, a top portion of each of the protrusions is configured to contact a bottom portion of the battery module to lift the battery module, and the first direction, the second direction, and the third direction are perpendicular to each other two by two.

In a second aspect, the present disclosure further provides a battery pack. The battery pack includes a battery box; and a battery module disposed in the accommodating cavity of the battery box.

According to the battery box provided in the present disclosure, the plurality of protrusions are provided at the bottom portion of the battery box, protruded from the bottom plate in the first direction, and arranged in an array in the second direction and the third direction, and the top portion of each of the protrusions is used to contact the bottom portion of the battery module to lift the battery module. By providing the above structure, the battery module is supported while the structural strength of the bottom portion of the battery box is increased. When the bottom portion of the battery box is subjected to an external impact, the probability of deforming the bottom portion of the battery box is reduced as much as possible, so that the battery module in the battery box is protected and the battery module operates normally.

According to the battery pack provided in the present disclosure, the battery module is disposed in the accommodating cavity of the battery box, so that stability in operation of the battery module is ensured.

### BRIEF DESCRIPTION OF THE DRAWINGS

FIG. 1 is a perspective diagram of a battery box according to some embodiments of the present disclosure.
FIG. 2 is a perspective diagram of another view of a battery box according to some embodiments of the present disclosure.
FIG. 3 is a top schematic diagram of a battery box according to some embodiments of the present disclosure.
FIG. 4 is a schematic diagram of a cross-section portion along A-A in FIG. 3.
FIG. 5 is a perspective diagram of a battery pack according to some embodiments of the present disclosure.

### REFERENCE NUMERALS OF THE ACCOMPANYING DRAWING:

1. Battery box;
10. Bottom plate; 11. Peripheral edge;
20. Side plate;
30. Accommodating cavity;
40. Protrusion;
50. Recessed structure;
60. Reinforcement;
70. Battery module;
X. First direction; Y Second direction; Z. Third direction.

### DETAILED DESCRIPTION

Technical solutions in embodiments of the present application will be clearly and completely described below in conjunction with drawings in the embodiments of the present application. Obviously, the described embodiments are only a part of embodiments of the present application, rather than all the embodiments. Based on the embodiments in the present application, all other embodiments obtained by those skilled in the art without creative work fall within the protection scope of the present application.

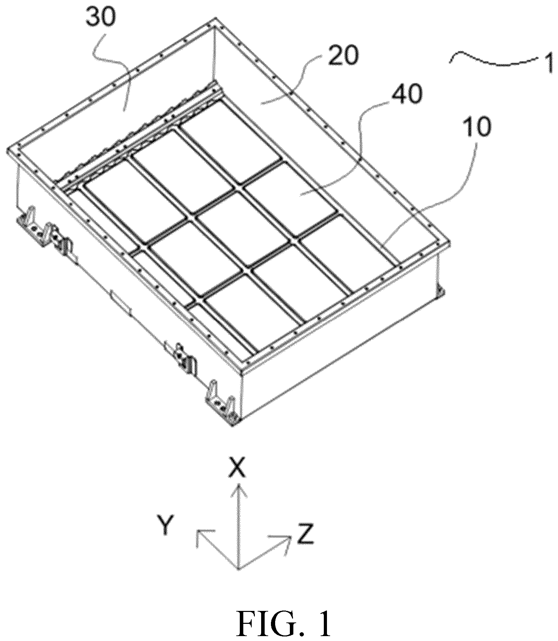

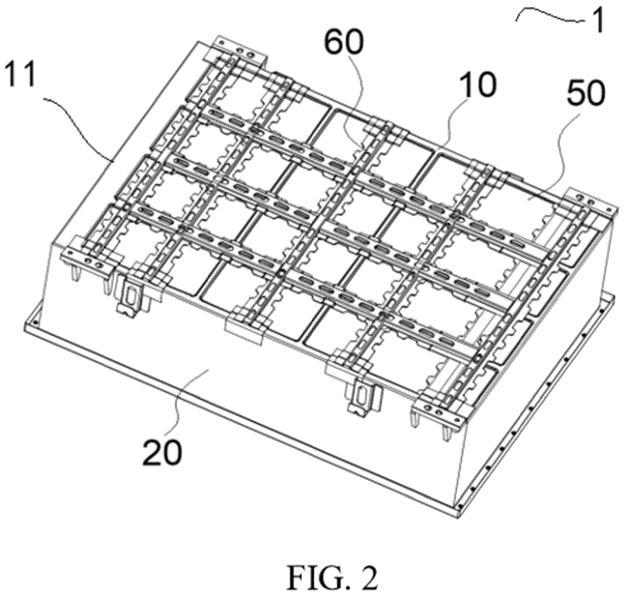

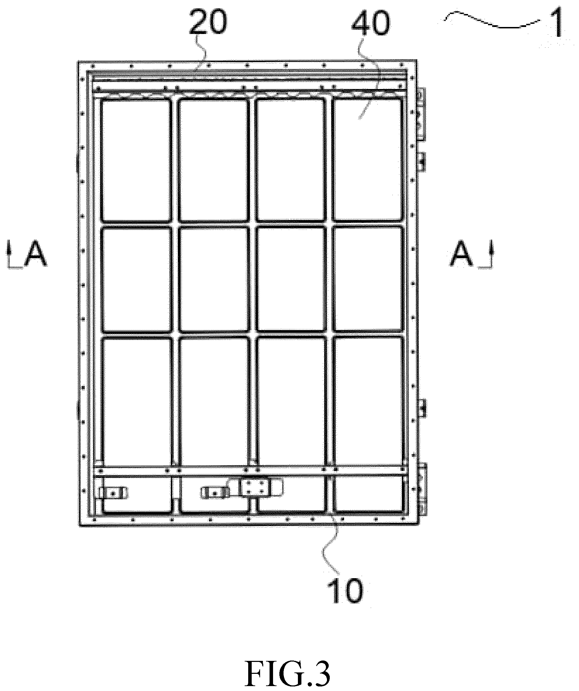

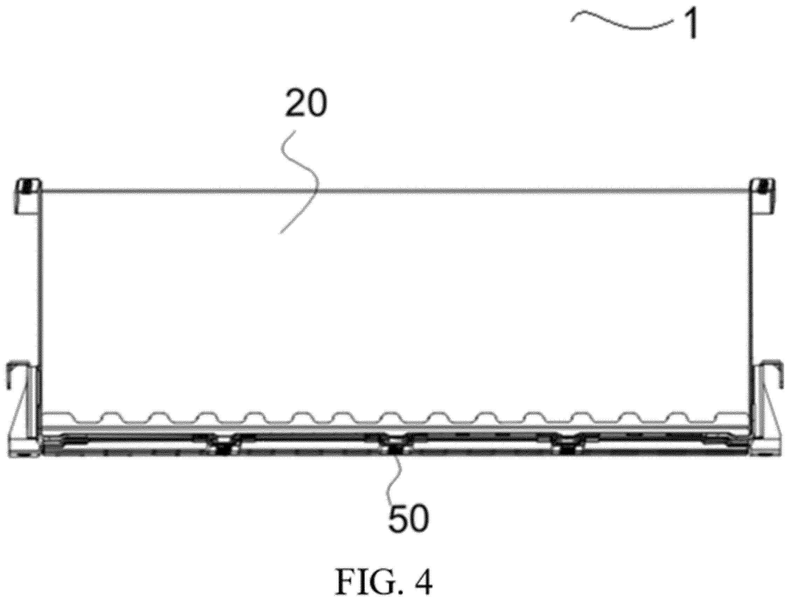

As shown in FIGS. 1 to 4, in a first aspect, some embodiments of the present disclosure provide a battery box 1. The battery box 1 includes: a bottom plate 10; a side plate 20, where the side plate 20 surrounds a peripheral edge 11 of the bottom plate 10 and is combined with the bottom plate 10 to form an accommodating cavity 30 for accommodating a battery module 70; and a plurality of protrusions 40 disposed in the accommodating cavity 30 and disposed on the bottom plate 10, where the protrusions 40 are protruded from the bottom plate 10 in a first direction and arranged in an array in a second direction and a third direction, a top portion of each of the protrusions 40 is configured to contact a bottom portion of the battery module 70 to lift the battery module 70, and the first direction, the second direction, and the third direction are perpendicular to each other two by two.

According to the above technical solution provided in the present disclosure, the plurality of protrusions 40 are provided at the bottom portion of the battery box 1, protruded from the bottom plate 10 in the first direction, and arranged in an array in the second direction and the third direction, and the top portion of each of the protrusions 40 is used to contact the bottom portion of the battery module 70 to lift the battery module 70. By providing the above structure, the battery module 70 is supported while the structural strength of the bottom portion of the battery box 1 is increased. When the bottom portion of the battery box 1 is subjected to an external impact, the probability of deforming the bottom portion of the battery box 1 is reduced as much as possible, so that the battery module 70 in the battery box 1 is protected and the battery module 70 operates normally.

In the present disclosure, the accommodating cavity 30 is further used for accommodating a coolant to cool the battery module 70, and the battery module 70 is completely immersed in the coolant, or the battery module 70 is partially immersed in the coolant. Specifically, a manner of setting the battery module 70 is selected according to the use environment of the device, so that the applicability and range of applicability of the battery box 1 is improved.

In the present disclosure, the protrusions 40 and the bottom plate 10 are integrally molded by extrusion, and an integrally molded technology enables manufacturing of complex shapes and structures to be completed in a short period of time, thereby significantly improving the production efficiency and advantageously satisfying the yield of an assembly. Compared with multiple steps and assembly process in the conventional processing method, the integrally molded technology is used to complete the manufacturing by disposable, thereby reducing the production cycle and improving the production efficiency of the bottom plate 10. Meanwhile, the integrally molded structure realizes high-precision manufacturing of the bottom plate 10, thereby facilitating reduction of the production defect rate of the bottom plate 10 and improving reliability and stability of the bottom plate 10. The dimensional accuracy and surface quality of the bottom plate 10 is ensured by accurately controlling the molded process of the bottom plate 10, such as parameters of temperature, pressure, and time.

Further, the integrally molded technology enables optimal utilization of a metal material, thereby reducing material waste and energy consumption. In selecting the metal material, precise selection of the metal material is made according to specific application scenarios and requirements to meet the performance requirements of the base plate 10. Meanwhile, the integrally molded structure avoids a problem of strength reduction that occurs in the conventional welding process, and improve the overall strength of the base plate 10. In addition, the integrally molded structure further makes full use of the low-density characteristics of the material, thereby greatly reducing the weight of the bottom plate 10. This helps to reduce the overall weight of the base plate 10. Furthermore, the integrally molded technology significantly reduces the production cost of the base plate 10 by reducing the number of production lines and welding steps of parts, thereby facilitating batch production of the battery box 1. Meanwhile, since the production efficiency is improved, the labor cost is also reduced.

In the present disclosure, the battery box 1 is made of a metal material, including, but not limited to, a material such as an aluminum alloy or stainless steel, or made of other material suitable for manufacturing the battery box 1, such as a high-strength composite material. That is, the bottom plate 10 and frames of the battery box 1 is made of a metal material, including, but not limited to, a material such as an aluminum alloy or stainless steel, or made of other material suitable for manufacturing the battery box 1, such as a high-strength composite material.

Due to the low density of the aluminum alloy, which is only about 1/3 of the steel, the strength of the aluminum alloy is relatively high. This means that the use of the aluminum alloy greatly reduces the overall weight of the battery box 1 while increasing the structural strength of the battery box 1, thereby facilitating transport of the battery box 1. Moreover, the surface of the aluminum alloy is easily formed with a dense oxide film which effectively prevents the contact of the corrosion medium with the internal metal, thereby realizing good corrosion resistance of the battery box 1. This allows the aluminum alloy to maintain good stability in a humid and strongly corrosive environment. Therefore, it is advantageous to extend the service life of the battery box 1.

Further, the thermal conductivity of the aluminum alloy is good, so that the heat of the battery box 1 is timely exchanged with the outside. Meanwhile, the aluminum alloy has good plasticity and processability, and is processed into various shapes and sizes of parts through casting, forging, rolling, extrusion and the like. In addition, the properties of the aluminum alloy is further improved by processes such as heat treatment, surface treatment, and the like.

Alternatively, the material of the battery box 1 is stainless steel, which itself is a material that is not easily rusted. In particular, in a humid and corrosive environment, the excellent corrosion resistance of the stainless steel ensures that the battery box 1 is used for a long time without being damaged. In addition, due to the integrated design of the battery box 1, the battery box 1 is not prone to crack, and the rust resistance of the battery box 1 is further enhanced. Moreover, the stainless steel is not synthesized from epoxy resin, so that neither radiation nor radioactive material is released, which is environmentally friendly and meets modern environmental requirements.

Specifically, the stainless steel has a bright outer surface and a good overall feeling, so that the battery box 1 is visually pleasing. Meanwhile, the surface of the battery box 1 has no gap, is not only easy to clean, but also does not generate bacteria, thereby increasing the safety of using of the battery box 1.

The stainless steel material has characteristics of high temperature oxidation resistance and high strength, so that the battery box 1 maintains good stability in extreme cases such as fire and the like, thereby reducing the safety risk.

Further, the surface of the box 1 is substantially free of gaps, and dust or rainwater is difficult to penetrate into the box 1, thereby effectively protecting the battery from the external environment. The stainless steel is high in strength, good in hardness, and difficult to deform under external force impact, thereby ensuring structural stability and safety of the battery box 1. The stainless steel battery box 1 is not easily faded, whether installed indoors or outdoors, and is simple to clean, and only needs to be wiped with a twisted wet wipe. Meanwhile, the material of the stainless steel has a good insulation property, which is particularly important for the battery box 1, because it effectively prevents the occurrence of arc discharge and short-circuit accidents, thereby increasing the safety of using of the battery box 1. In the present disclosure, a manufacturing material of the battery box 1 should be selected according to the actual use environment, so that the applicability and the application range of the battery box 1 is improved, which is not specifically limited herein.

In the present disclosure, X is the first direction, Y is the second direction, and Z is the third direction.

In some embodiments of the present disclosure, a portion of each of the protrusions 40 protruded from the bottom plate 10 in the first direction has a height of H, where 1mm≤H≤5mm. When H>5mm, the height of the portion of the each of the protrusions 40 protruded from the bottom plate 10 in the first direction is too large, which causes the protrusion 40 to occupy too much space. After the battery module 70 is placed in the battery box 1, a gap between the battery module 70 and the bottom plate 10 is larger, thereby wasting a portion of space. Meanwhile, this also causes the volume of the battery box 1 to be too large, which is not conducive to the miniaturization of the battery box 1. When H<1mm, the height of the portion of the each of the protrusions 40 protruded from the bottom plate 10 in the first direction is too small, which is not convenient for processing of the protrusions 40, thereby reducing the processing efficiency of the bottom plate 10. Therefore, 1mm≤H≤5mm not only makes reasonable use of the space of the accommodating cavity 30, but also facilitates the processing of the protrusions 40 without excessive space occupied by the protrusions 40, thereby improving the processing efficiency of the bottom plate 10. Alternatively, H is set to a value, such as 1mm, 3mm, 5mm, or the like. Specifically, the setting of H should be selected according to the use environment of the protrusions 40, which is not specifically limited herein.

In some embodiments of the present disclosure, every two adjacent ones of the plurality of protrusions 40 are spaced apart in the second direction by L2, and every two adjacent ones of the plurality of protrusions 40 are spaced apart in the third direction by L3, where L2≥L3. As such, it is possible to makes two adjacent ones of the protrusions 40 to generate no mutual interference, which not only facilitates the processing of the protrusions 40, but also reinforces the structure of the base plate 10 as much as possible, so as to improve the structural strength of the base plate 10.

In some embodiments of the present disclosure, 5mm≤L2≤16mm, and 5mm≤L3≤16mm. When L2>16mm, a plurality of protrusions 40 are excessively spaced in the second direction, which causes the protrusions 40 to occupy an excessive space, thereby disfavoring the provision of a greater number of protrusions 40. When L2<5mm, the plurality of protrusions 40 are insufficiently spaced in the second direction, which causes an interference between the two adjacent ones of the protrusions 40 due to an excessively close spacing between the two adjacent protrusions. Therefore, 5mm≤L2≤16mm not only makes reasonable use of the space of the accommodating cavity 30, but also facilitates the provision of a greater number of protrusions 40 without excessive space occupied by the protrusions 40, and it is possible to makes two adjacent ones of the protrusions 40 to generate no mutual interference. The L2 is set to a value, such as, 5mm, 10mm, or 16mm. Specifically, the setting of L2 should be selected according to the use environment of the protrusions 40, which is not specifically limited herein.

When L3>16mm, a plurality of protrusions 40 are excessively spaced in the third direction, which causes the protrusions 40 to occupy an excessive space, thereby disfavoring the provision of a greater number of protrusions 40. When L3<5mm, the plurality of protrusions 40 are insufficiently spaced in the third direction, which causes an interference between the two adjacent ones of the protrusions 40 due to an excessively close spacing between the two adjacent protrusions. Therefore, 5mm≤L3≤16mm not only makes reasonable use of the space of the accommodating cavity 30, but also facilitates the provision of a greater number of protrusions 40 without excessive space occupied by the protrusions 40, and it is possible to makes two adjacent ones of the protrusions 40 to generate no mutual interference. The L3 is set to a value, such as, 5mm, 10mm, or 16mm. Specifically, the setting of L2 should be selected according to the use environment of the protrusions 40, which is not specifically limited herein.

In some embodiments of the present disclosure, cross-sections of the protrusions 40 in the second direction is a quadrangle and/or a circular shape. In the present disclosure, the cross-section of the protrusion 40 in the second direction is the quadrangle. Alternatively, the cross-section of the protrusion 40 in the second direction is provided in other shape such as a trapezoidal shape, as long as the use requirement of the battery box 1 is satisfied.

In some embodiments of the present disclosure, a recessed structure 50 is disposed at a side of the bottom plate 10 away from the protrusion 40 and disposed in correspondence with the protrusions 40. By providing the above-mentioned structure, it is possible to reduce the material required for processing the bottom plate 10, thereby facilitating reduction of the weight of the bottom plate 10 and lightweight development of the bottom plate 10 while reinforcing the structural strength of the bottom plate 10.

In some embodiments of the present disclosure, the battery box 1 further includes a reinforcement 60 disposed at a side of the bottom plate 10 away from the protrusions 40 and connected to the recessed structure 50. By providing the above-mentioned structure, it is possible to further improve the structural strength of the bottom plate 10, so as to prevent deformation and the like of the bottom plate 10 during the operation of the battery box 1, thereby facilitating prolonging the service life of the battery box 1 and maintaining the stable operation of the battery module 70.

In some embodiments of the present disclosure, the battery box 1 includes a plurality of reinforcements 60 arranged at intervals in the second direction and/or the third direction. As such, the structural strength of the bottom plate 10 is improved as much as possible, so that the bottom plate 10 meets the user's use requirements in different environments.

In some embodiments of the present disclosure, the material of the reinforcement 60 includes 304 stainless steel. Since the 304 stainless steel contains 18% chromium and 8% nickel, it has excellent corrosion resistance and is resistant to erosion by most chemical media, including acids, bases, salts, and the like, and a passivation film formed on the surface of the reinforcement 60 is effective in resisting corrosion and prolonging the service life. This advantageously increases the service life of the reinforcement 60. Meanwhile, the 304 stainless steel has higher high temperature resistance, and maintains structural stability and mechanical properties in a high temperature environment, so that the reinforcement 60 is used in a high temperature operation.

Meanwhile, the reinforcement 60 lifts the battery box 1 to meet the use requirements of the battery box 1.

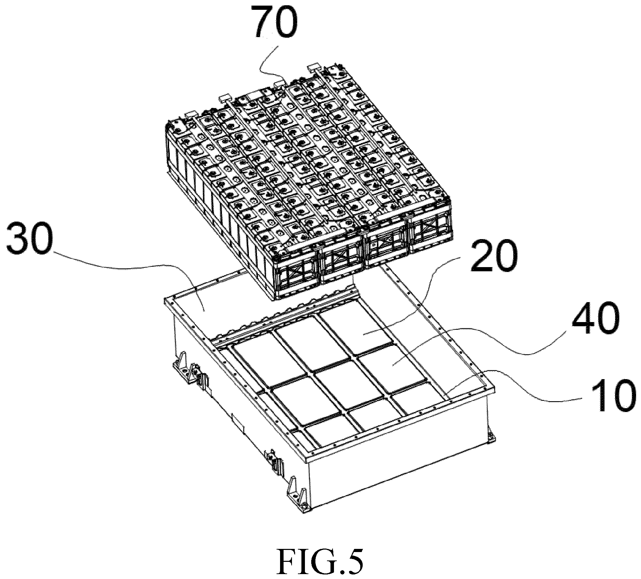

As shown in FIG. 5, in a second aspect, some embodiments of the present disclosure provide a battery pack, including: the battery box 1 described above; and a battery module 70 disposed in the accommodating chamber 30 of the battery box 1.

According to the above technical solution provided in the present disclosure, the plurality of protrusions 40 are provided at the bottom portion of the battery box 1, protruded from the bottom plate 10 in the first direction, and arranged in an array in the second direction and the third direction, and the top portion of each of the protrusions 40 is used to contact the bottom portion of the battery module 70 to lift the battery module 70. By providing the above structure, the battery module 70 is supported while the structural strength of the bottom portion of the battery box 1 is increased. When the bottom portion of the battery box 1 is subjected to an external impact, the probability of deforming the bottom portion of the battery box 1 is reduced as much as possible, so that the battery module 70 in the battery box 1 is protected and the battery module 70 operates normally.

## Claims

1. A battery box (1), **characterized in that** the battery box (1) comprises:
a bottom plate (10);
a side plate (20), wherein the side plate (20) surrounds a peripheral edge (11) of the bottom plate (10) and is combined with the bottom plate (10) to form an accommodating cavity (30) for accommodating a battery module (70); and
a plurality of protrusions (40) disposed in the accommodating cavity (30) on the bottom plate (10), wherein the protrusions (40) are protruded from the bottom plate (10) in a first direction (X) and arranged in an array in a second direction (Y) and a third direction (Z), a top portion of each of the protrusions (40) is configured to contact a bottom portion of the battery module (70) to lift the battery module (70), and the first direction (X), the second direction (Y), and the third direction (Z) are perpendicular to each other two by two.

2. The battery box (1) of claim 1, **characterized in that** a portion of the each of the protrusions (40) protruded from the bottom plate (10) in the first direction (X) has a height of H, and 1mm≤H≤5mm.

3. The battery box (1) of claim 1 or 2, **characterized in that** every two adjacent ones of the plurality of protrusions (40) are spaced apart in the second direction (Y) by L2, every two adjacent ones of the plurality of protrusions (40) are spaced apart in the third direction (Z) by L3, and L2≥L3.

4. The battery box (1) of claim 3, **characterized in that** 5mm≤L2≤16mm, and 5mm≤L3≤16mm.

5. The battery box (1) of any one of claims 1-4, **characterized in that** cross-sections of the protrusions (40) in the second direction (Y) are any one or a combination of two of a quadrangle and a circular shape.

6. The battery box (1) of any one of claims 1-4, **characterized in that** a recessed structure (50) is disposed at a side of the bottom plate (10) away from the each of the protrusions (40) and disposed in correspondence with the protrusion (40).

7. The battery box (1) of claim 6, **characterized in that** the battery box (1) further comprises a reinforcement (60) disposed at a side of the bottom plate (10) away from the protrusions (40) and connected to the recessed structure (50).

8. The battery box (1) of claim 7, **characterized in that** the battery box (1) further comprises a plurality of reinforcements (60) arranged at intervals in any one or a combination of two of the second direction (Y) and the third direction (Z).

9. The battery box (1) of claim 7, **characterized in that** a material of the reinforcement (60) comprises 304 stainless steel.

10. The battery box (1) of any one of claims 1-9, **characterized in that** the protrusions (40) and the bottom plate (10) are integrally molded by extrusion.

11. The battery box (1) of any one of claims 1-9, **characterized in that** a material of the battery box (1) is metal.

12. The battery box (1) of claim 11, **characterized in that** the metal is aluminum alloy.

13. The battery box (1) of claim 11, **characterized in that** the metal is stainless steel.

14. The battery box (1) of any one of claims 1-13, **characterized in that** the accommodating cavity (30) is further configured to accommodate a coolant, and the battery module (70) is immersed in the coolant.

15. A battery pack, **characterized in that** the battery pack further comprises:
the battery box (1) of any one of claims 1-14; and
a battery module (70) disposed in the accommodating cavity (30) of the battery box (1).
